# EUROPEAN PATENT SPECIFICATION

(11) **EP 4 578 219 B1**
(45) Date of publication and mention of the grant of the patent: **29.10.2025**
(21) Application number: 23761628.9
(22) Date of filing: 22.08.2023
(51) Int. Cl.: H04W 36/08, H04W 36/16, H04W 36/34, H04W 48/20, H04W 36/00

(54) **METHODS AND APPARATUS FOR INCLUDING INFORMATION CONCERNING THE SELECTED CELL (SUITABLE OR ACCEPTABLE CELL) IN A FAILURE REPORT**
VERFAHREN UND VORRICHTUNG ZUR AUFNAHME VON INFORMATIONEN ÜBER DIE AUSGEWÄHLTE ZELLE (GEEIGNETE ODER AKZEPTABLE ZELLE) IN EINEN FEHLERBERICHT
PROCÉDÉS ET APPAREIL POUR INCLURE DES INFORMATIONS CONCERNANT LA CELLULE SÉLECTIONNÉE (CELLULE APPROPRIÉE OU ACCEPTABLE) DANS UN RAPPORT DE DÉFAILLANCE

(30) Priority: 23.08.2022 US 202263400325 P
(43) Date of publication of application: 02.07.2025
(73) Proprietor: Telefonaktiebolaget LM Ericsson (publ), 164 83 Stockholm (SE)
(72) Inventor: PARICHEHREHTEROUJENI, Ali, 583 34 LINKÖPING (SE); BERGSTRÖM, Mattias, 19270 SOLLENTUNA (SE)
(74) Representative: Ericsson
(86) International application number: PCT/SE2023/050854
(87) International publication number: WO 2024/043825

(56) References cited:
- WO-A1-2022/021077
- US-A1- 2020 112 892
- US-A1- 2020 245 195
- ERICSSON: "On Mobility Robustness Optimization", vol. RAN WG2, no. Electronic meeting; 20220817 - 20220829, 10 August 2022 (2022-08-10), XP052261489, Retrieved from the Internet <URL:https://ftp.3gpp.org/tsg_ran/WG2_RL2/TSGR2_119-e/Docs/R2-2208177.zip R2-2208177 - On Mobility Robustness Optimization.docx> [retrieved on 20220810]
- QUALCOMM INCORPORATED: "Data collection for MRO for MR-DC SCG failures and inter-system handover for voice fallback", vol. RAN WG2, no. Electronic; 20220817 - 20220829, 10 August 2022 (2022-08-10), XP052261470, Retrieved from the Internet <URL:https://ftp.3gpp.org/tsg_ran/WG2_RL2/TSGR2_119-e/Docs/R2-2208157.zip R2-2208157 - Data collection for MRO for MR-DC SCG failures and inter-system handover for voice fallback.docx> [retrieved on 20220810]
- ERICSSON: "MRO for inter-system handover for voice fallback", vol. RAN WG2, no. Electronic meeting; 20221010 - 20221019, 29 September 2022 (2022-09-29), XP052263506, Retrieved from the Internet <URL:https://ftp.3gpp.org/tsg_ran/WG2_RL2/TSGR2_119bis-e/Docs/R2-2210183.zip R2-2210183 - MRO for inter-system handover for voice fallback.docx> [retrieved on 20220929]
- ERICSSON: "Mobility Robustness Optimization - all topics", vol. RAN WG2, no. Incheon; 20230522 - 20230526, 12 May 2023 (2023-05-12), XP052390749, Retrieved from the Internet <URL:https://ftp.3gpp.org/tsg_ran/WG2_RL2/TSGR2_122/Docs/R2-2305987.zip R2-2305987 - Mobility Robustness Optimisation â all topics.docx> [retrieved on 20230512]
- ZTE CORPORATION ET AL: "Consideration on MRO for inter-system handover for voice fallback", vol. RAN WG2, no. Electronic meeting; 20221010 - 20221019, 30 September 2022 (2022-09-30), XP052263609, Retrieved from the Internet <URL:https://ftp.3gpp.org/tsg_ran/WG2_RL2/TSGR2_119bis-e/Docs/R2-2210287.zip R2-2210287 Consideration on MRO for inter-system handover for voice fallback.doc> [retrieved on 20220930]
- QUALCOMM INCORPORATED: "Data collection for MRO for inter-system handover for voice fallback", vol. RAN WG2, no. Electronic; 20221010 - 20221019, 29 September 2022 (2022-09-29), XP052263622, Retrieved from the Internet <URL:https://ftp.3gpp.org/tsg_ran/WG2_RL2/TSGR2_119bis-e/Docs/R2-2210300.zip R2-2210300 - Data collection for MRO for inter-system handover for voice fallback.docx> [retrieved on 20220929]

## Description

### Related Applications

This application claims the benefit of provisional patent application serial number 63/400,325, filed August 23, 2022.

### Technical Field

The present disclosure relates to a cellular communications system and, more specifically, to failure reporting in a cellular communications system.

### Background

### Voice Fallback from NR to LTE

In 3^{rd} Generation Partnership Project (3GPP), voice fallback from New Radio (NR) to Long Term Evolution (LTE) is used to transfer a User Equipment (UE) from NR to LTE during call establishment procedure. It enables UE to utilize all NR functionality except voice options in places where NR network is not optimized for voice services. In order to support various deployment scenarios for obtaining Internet Protocol (IP) Multimedia Subsystem (IMS) voice service, the UE and Next Generation (NG) Radio Access Network (RAN) (i.e., NG-RAN) may support the mechanism to direct or redirect the UE from NG-RAN either towards Evolved Universal Terrestrial Radio Access (E-UTRA) connected to Fifth Generation Core (5GC) (which is referred to as Radio Access Technology (RAT) fallback) or towards Evolved Packet System (EPS) (referred to as Evolved Universal Terrestrial Radio Access Network (E-UTRAN) connected to Evolved Packet Core (EPC) System fallback). During the UE registration procedure, the serving Access and Mobility Management Function (AMF) informs the UE if IMS voice over packet switched (PS) session is supported. If a request for establishing the Quality of Service (QoS) flow for IMS voice reaches the NG-RAN, the NG-RAN responds indicating rejection of the establishment request, and the NG-RAN may trigger one of the following procedures depending on UE capabilities, N26 availability, network configuration, and radio conditions:
- Redirection to EPS;
- Handover procedure to EPS;
- Redirection to E-UTRA connected to 5GC; or
- Handover to E-UTRA connected to 5GC.

Further details can be found in 3GPP Technical Specification (TS) 23.501 V17.4.0.

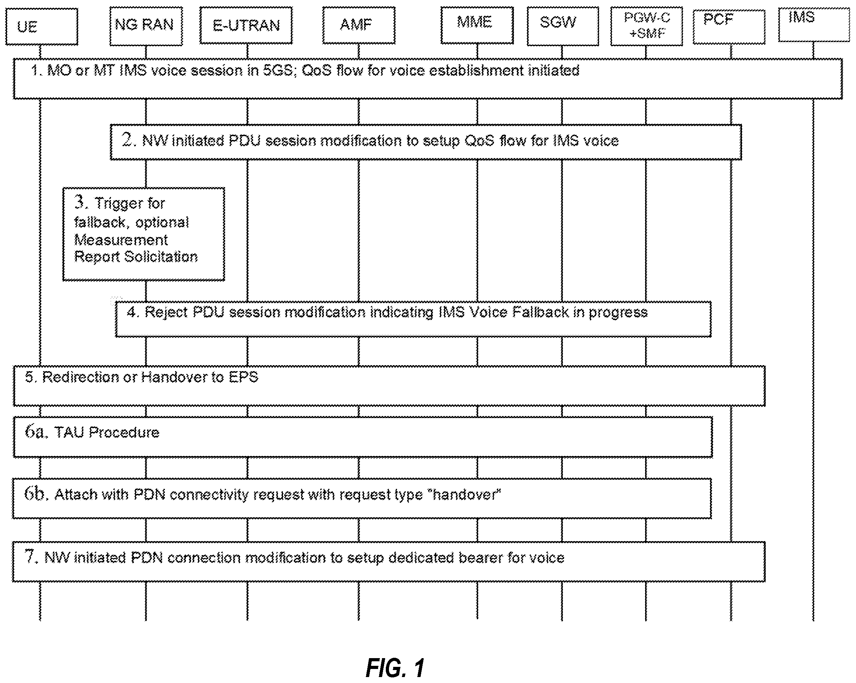

Figure 1 describes the EPS fallback procedure for IMS voice. A detailed description of Figure 1 can be found in section 4.13.6.1 of 3GPP TS 23.502 V17.4.0 [2].

### Self-Organizing Networks (SON) in 3GPP

A Self-Organizing Network (SON) is an automation technology designed to make the planning, configuration, management, optimization, and healing of mobile radio access networks simpler and faster. SON functionality and behavior has been defined and specified in generally accepted mobile industry recommendations produced by organizations such as 3GPP and the Next Generation Mobile Networks (NGMNs).

In 3GPP, the processes within the SON area are classified into self-configuration process and self-optimization process. Self-configuration process is the process where newly deployed nodes are configured by automatic installation procedures to get the necessary basic configuration for system operation. This process works in pre-operational state. Pre-operational state is understood as the state from when the base station (e.g., evolved Node B (eNB) for LTE/E-UTRA) is powered up and has backbone connectivity until the radio frequency (RF) transmitter is switched on.

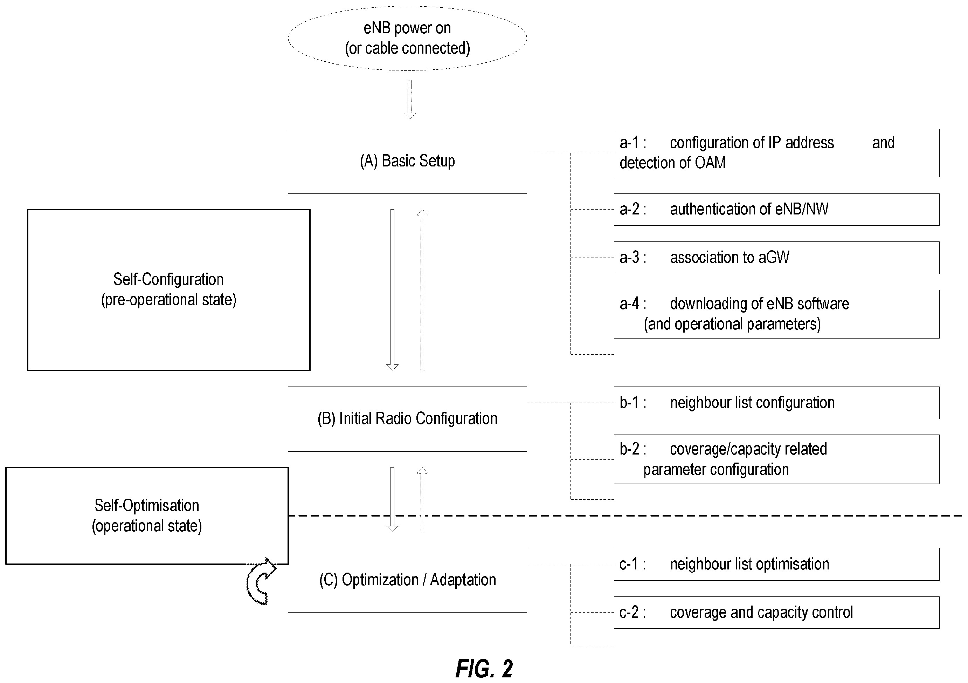

Figure 2 is a reproduction of Figure 22.1-1 of 3GPP TS 36.300 and illustrates ramifications of self-configuration /self-optimization functionality. As illustrated in Figure 2, functions handled in the pre-operational state like:
- Basic Setup; and
- Initial Radio Configuration.
are covered by the Self Configuration process.

Self-optimization process is defined as the process where UE and access node measurements and performance measurements are used to auto-tune the network. This process works in operational state. Operational state is understood as the state where the RF interface is additionally switched on.

As described in Figure 2, functions handled in the operational state like:
- Optimization / Adaptation
are covered by the Self Optimization process.

In LTE, support for Self-Configuration and Self-Optimization is specified, as described in 3GPP TS 36.300 section 22.2, including features such as dynamic configuration, Automatic Neighbor Relation (ANR), mobility load balancing, Mobility Robustness Optimization (MRO), Random Access Channel (RACH) optimization, and support for energy saving.

In NR, support for Self-Configuration and Self-Optimization is specified as well, starting with Self-Configuration features such as Dynamic configuration, Automatic Neighbor Relation (ANR) in Rel-15, as described in 3GPP TS 38.300 section 15. In NR Rel-16, more SON features are being specified, including Self-Optimization features such as Mobility Robustness Optimization (MRO).

### Mobility Robustness Optimization (MRO) in 3GPP

Seamless handovers are a key feature of 3GPP technologies. Successful handovers ensure that the UE moves around in the coverage area of different cells without causing too many interruptions in the data transmission. However, there will be scenarios when the network fails to handover the UE to the 'correct' neighbor cell in time and in such scenarios the UE will declare the Radio Link Failure (RLF) or Handover Failure (HOF).

Upon HOF and RLF, the UE may take autonomous actions, i.e., try to select a cell and initiate reestablishment procedure so that the UE tries to get back as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, Radio Resource Control (RRC) Reestablishment Request, RRC Reestablishment RRC Reestablishment Complete, RRC Reconfiguration and RRC Reconfiguration Complete) and adds some latency, until the UE can exchange data with the network again.

According to 3GPP specifications (3GPP TS 36.331), the possible causes for the radio link failure could be one of the following:
1) Expiry of the radio link monitoring related timer T310;
2) Expiry of the measurement reporting associated timer T312 (not receiving the handover command from the network within this timer's duration despite sending the measurement report when T310 was running);
3) Upon reaching the maximum number of Radio Link Control (RLC) retransmissions;
4) Upon receiving random access problem indication from the MAC entity;

As RLF leads to reestablishment which degrades performance and user experience, it is in the interest of the network to understand the reasons for RLF and try to optimize mobility related parameters (e.g., trigger conditions of measurement reports) to avoid later RLFs. Before the standardization of MRO related report handling in the network, only the UE was aware of some information associated to how the radio quality looked like at the time of RLF, what is the actual reason for declaring RLF etc. For the network to identify the reason for the RLF, the network needs more information, both from the UE and also from the neighboring base stations.

As part of the MRO solution in LTE, the RLF reporting procedure was introduced in the RRC specification in Rel-9 RAN2 work. That has impacted the RRC specifications (TS 36.331) in the sense that it was standardized that the UE would log relevant information at the moment of an RLF and later report to a target cell if the UE succeeds to connect (e.g., after reestablishment). That has also impacted the inter-gNodeB interface, i.e., X2AP specifications (3GPP TS 36.423), as an eNodeB receiving an RLF report could forward to the eNodeB where the failure has been originated.

For the RLF report generated by the UE, its contents have been enhanced with more details in the subsequent releases. The measurements included in the measurement report based on the latest LTE RRC specification (i.e., V17.1.0) are:
1) Measurement quantities (Reference Signal Received Power (RSRP), Reference Signal Received Quality (RSRQ)) of the last serving cell (Primary Cell (PCell)).
2) Measurement quantities of the neighbor cells in different frequencies of different RATs (Evolved Universal Terrestrial Radio Access (EUTRA), Universal Terrestrial Radio Access (UTRA), Global System for Mobile communications (GSM) Enhanced Data rates for GSM Evolution (EDGE) Radio Access Network (GERAN), Code Division Multiple Access (CDMA) 2000).
3) Measurement quantity (Received Strength of Signal Indicator (RSSI)) associated to Wireless Local Area Network (WLAN) Access Points (APs).
4) Measurement quantity (RSSI) associated to Bluetooth beacons.
5) Location information, if available (including location coordinates and velocity)
6) Globally unique identity of the last serving cell, if available, otherwise the Physical Cell Identity (PCI) and the carrier frequency of the last serving cell.
7) Tracking area code of the PCell.
8) Time elapsed since the last reception of the *'Handover command'* message.
9) Cell Radio Network Temporary Identifier (C-RNTI) used in the previous serving cell.
10) Whether or not the UE was configured with a Data Radio Bearer (DRB) having Quality of Service (QoS) Class Identifier (QCI) value of 1.

After the RLF is declared, the RLF report is logged and included in the VarRLF-Report and, once the UE selects a cell and succeeds with a reestablishment, it includes an indication that it has an RLF report available in the RRC Reestablishment Complete message, to make the target cell aware of that availability. Then, upon receiving an *UEInformationRequest* message with a flag "rlf-ReportReq-r9" the UE shall include the RLF report (stored in a UE variable VarRLF-Report, as described above) in an *UEInformationResponse* message and send to the network.

Based on the RLF report from the UE and the knowledge about which cell the UE reestablished itself, the original source cell can deduce whether the RLF was caused due to a coverage hole or due to handover associated parameter configurations. If the RLF was deemed to be due to handover associated parameter configurations, the original serving cell can further classify the handover related failure as too-early, too-late or handover to wrong cell classes. These handover failure classes are explained in brief below.
1) Whether the handover failure occurred due to the 'too-late handover' cases
   a. The original serving cell can classify a handover failure to be 'too late handover' when the original serving cell fails to send the handover command to the UE associated to a handover towards a particular target cell and if the UE reestablishes itself in this target cell post RLF.
   b. An example corrective action from the original serving cell could be to initiate the handover procedure towards this target cell a bit earlier by decreasing the Cell Individual Offset (CIO) towards the target cell that controls when the IE sends the event triggered measurement report that leads to taking the handover decision.
2) Whether the handover failure occurred due to the 'too-early handover' cases
   a. The original serving cell can classify a handover failure to be 'too early handover' when the original serving cell is successful in sending the handover command to the UE associated to a handover however the UE fails to perform the random access towards this target cell.
   b. An example corrective action from the original serving cell could be to initiate the handover procedure towards this target cell a bit later by increasing the CIO towards the target cell that controls when the IE sends the event triggered measurement report that leads to taking the handover decision.
3) Whether the handover failure occurred due to the "handover-to-wrong-cell" cases
   a. The original serving cell can classify a handover failure to be "handover-to-wrong-cell' when the original serving cell intends to perform the handover for this UE towards a particular target cell but the UE declares the RLF and reestablishes itself in a third cell.
   b. A corrective action from the original serving cell could be to initiate the measurement reporting procedure that leads to handover towards the target cell a bit later by decreasing the CIO towards the target cell or via initiating the handover towards the cell in which the UE reestablished a bit earlier by increasing the CIO towards the reestablishment cell.

Further relevant documents to understand the following disclosure are WO2022/021077A1, US2020/112892A1 and US2020/245195A1 as well as non-patent literature, i.e. 3GPP contributions, R2-2208177 "Ericsson: On Mobility Optimization" and R2-2208157 "Qualcomm: Data collection for MRO for MR-DC SCG failures and inter-system handover for voice fallback".

### Summary

The invention is set out in the independent claims.

Further embodiments are set out in the dependent claims.

### Brief Description of the Drawings

The accompanying drawing figures incorporated in and forming a part of this specification illustrate several aspects of the disclosure, and together with the description serve to explain the principles of the disclosure.
Figure 1 describes the Evolved Packet System (EPS) fallback procedure for Internet Protocol (IP) Multimedia Subsystem (IMS) voice as defined in 3^{rd} Generation Partnership Project (3GPP) Technical Specification (TS) 23.502 V17.4.0;
Figure 2 is a reproduction of Figure 22.1-1 of 3GPP TS 36.300 and illustrates ramifications of self-configuration /self-optimization functionality;
Figure 3 is a flow chart that illustrates the operation of a wireless terminal (e.g., a User Equipment (UE)) in accordance with one embodiment of the present disclosure;
Figure 4 shows an example of a communication system in accordance with some embodiments;
Figure 5 shows a UE in accordance with some embodiments;
Figure 6 shows a network node in accordance with some embodiments;
Figure 7 is a block diagram of a host, which may be an embodiment of the host of Figure 4, in accordance with various aspects described herein;
Figure 8 is a block diagram illustrating a virtualization environment in which functions implemented by some embodiments may be virtualized;
Figure 9 shows a communication diagram of a host communicating via a network node with a UE over a partially wireless connection in accordance with some embodiments; and
Figure 10 is a flow chart that illustrates the operation of a network node in accordance with one embodiment of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

There currently exist certain challenge(s). When a User Equipment (UE) performs an inter-system voice fallback related handover and if the handover fails, then the UE first stores the Radio Link Failure (RLF) report and then performs a cell selection in Long Term Evolution (LTE) itself before coming back to New Radio (NR).

According to R2-2208617 "Enhancements for emergency services fallback handling", 3GPP TSG-RAN WG2 Meeting #119 electronic, August 17^{th}-August 29^{th}, 2022 and the discussion in RAN2 meeting #119, the UE may select either a suitable cell or an acceptable cell. As of now, the UE does not log the selected cell information, so this information is lost. It has been proposed to include the selected cell in the RLF report; however, the network is not capable of understanding whether the selected cell was a suitable cell or an acceptable cell. In addition, the UE may reselect a cell in another Public Land Mobile Network (PLMN), and such information is also not known to the network.

Note that, as defined in 3GPP TS 38.304 V17.1.0, a suitable cell is "a cell on which a UE may camp." For NR cell, the criteria for a suitable cell are defined in clause 4.5 of 3GPP TS 38.304 V17.1.0, which states:
For UE not operating in SNPN Access Mode, a cell is considered as suitable if the following conditions are fulfilled:
- The cell is part of either the selected PLMN or the registered PLMN or PLMN of the Equivalent PLMN list, and for that PLMN either:
- The PLMN-ID of that PLMN is broadcast by the cell with no associated CAG-IDs and CAG-only indication in the UE for that PLMN (TS 23.501 [10]) is absent or false;
- Allowed CAG list in the UE for that PLMN (TS 23.501 [10]) includes a CAG-ID broadcast by the cell for that PLMN;
- The cell selection criteria are fulfilled, see clause 5.2.3.2.

According to the latest information provided by NAS:
- The cell is not barred, see clause 5.3.1;
- The cell is part of at least one TA that is not part of the list of "Forbidden Tracking Areas for Roaming" (TS 22.011 [18]), which belongs to a PLMN that fulfils the first bullet above.

For UE operating in SNPN Access Mode, a cell is considered as suitable if the following conditions are fulfilled:
- The cell is part of either the selected SNPN or the registered SNPN of the UE;
- The cell selection criteria are fulfilled, see clause 5.2.3.2;

According to the latest information provided by NAS:
- The cell is not barred, see clause 5.3.1;
- The cell is part of at least one TA that is not part of the list of "Forbidden Tracking Areas for Roaming" which belongs to either the selected SNPN or the registered SNPN of the UE.

For E-UTRA, criteria for a suitable cell are found in 3GPP TS 36.304 V17.1.0.

Conversely, as defined in 3GPP TS 38.304 V17.1.0, an acceptable cell is "[a] cell that satisfies certain conditions as specified in 4.5". Clause 4.5 of 3GPP TS 38.304 V17.1.0 states:
An "acceptable cell" is a cell on which the UE may camp to obtain limited service (originate emergency calls and receive ETWS and CMAS notifications). Such a cell shall fulfil the following requirements, which is the minimum set of requirements to initiate an emergency call and to receive ETWS and CMAS notification in an NR network:
- The cell is not barred, see clause 5.3.1;
- The cell selection criteria are fulfilled, see clause 5.2.3.2.

Certain aspects of the disclosure and their embodiments may provide solutions to these or other challenges. Embodiments of methods performed by a UE are disclosed in which the UE includes at least one piece of information in an RLF report that indicates to a network node that a first selected cell was a suitable cell or an acceptable cell. In addition, in one embodiment, the UE indicates whether a concerned service (e.g., emergency call) was activated in the selected cell or not. Moreover, in one embodiment, the UE logs information concerning a PLMN in which the UE selected the first selected cell (which is an Evolved Universal Terrestrial Radio Access (EUTRA) cell, e.g., in case of NR to EUTRA fallback).

In one embodiment, a method performed by a UE comprises one or more of the following steps:
- Receiving a configuration from a first network cell (which may be served by a first node, e.g., an NR source node) to perform handover to a second network cell (which may be served by a second node, e.g. an LTE network node), the configuration comprising indication indicating voice fallback purpose.
- Attempting to connect to the second network node
- Failing to connect to the second network node
- Storing the information associated to the failure in a first report (e.g., an RLF report)
- Attempting to perform cell selection in the same radio access technology as the second network node and selecting a cell in the same radio access technology
- Including an indication in the first report (e.g., the RLF report) indicating whether the selected cell was a suitable cell or an acceptable cell.
- Including an indication in the first report (e.g., the RLF report) indicating whether emergency services was enabled for the selected cell.
- Including an indication (e.g., in the first report (e.g., the RLF report)) pertaining to the PLMN identity of the selected cell
- Transmitting the first report (e.g., the RLF report) to a network node.

Certain embodiments may provide one or more of the following technical advantage(s). Based on embodiments of the methods disclosed herein, the UE can aid the network to understand whether the selected cell was a suitable cell or an acceptable cell. In addition, in some embodiments, the UE indicates the PLMN identity of the selected cell which can be used for future handovers by the Radio Access Network (RAN) nodes.

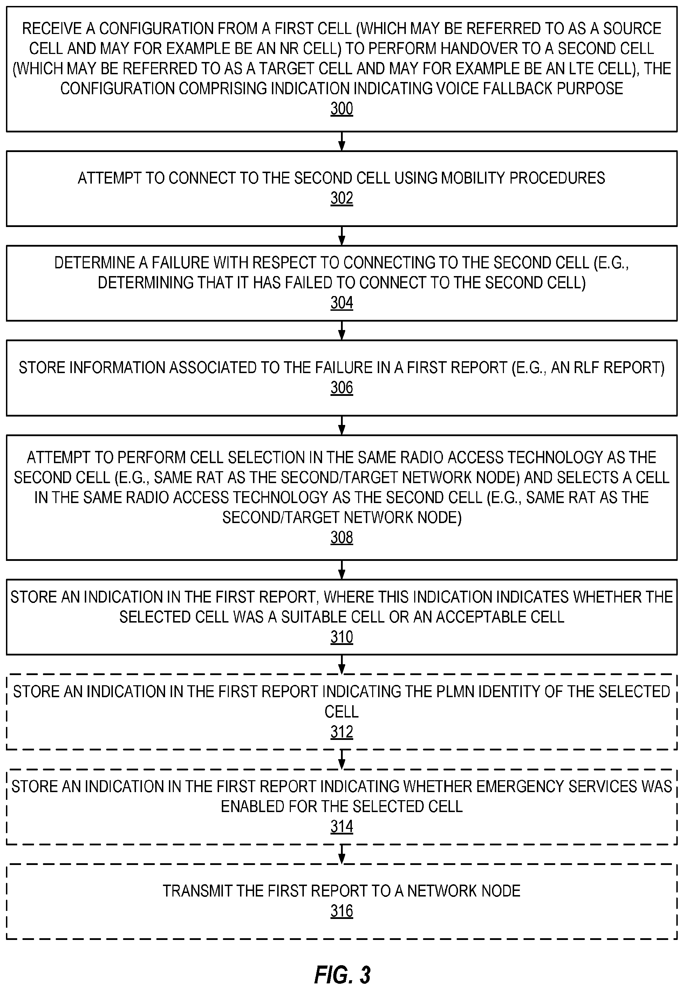

Figure 3 is a flow chart that illustrates the operation of a wireless terminal (e.g., a User Equipment (UE) in the following description) in accordance with one embodiment of the present disclosure. As illustrated, the steps of the procedure are as follows:
- Step 300: The UE receives a configuration from a first cell (which may be referred to as a source cell and may for example be an NR cell) to perform handover to a second cell (which may be referred to as a target cell and may for example be an LTE cell), the configuration comprising indication indicating voice fallback purpose.
   ∘ In one embodiment, the first cell is associated with a first network node (e.g., of a first RAT such as, e.g., NR) and the second cell is associated with a second network node (e.g., of a second RAT such as, e.g., EUTRA).
- Step 302: The UE attempts to connect to the second cell using mobility procedures e.g., handover procedure which may be referred to as "reconfiguration with sync" procedure.
- Step 304: The UE determines failure with respect to connecting to the second cell (e.g., determines that it has failed to connect to the second cell).
   ∘ In one embodiment, the failure is a handover failure
   ∘ In another embodiment, the failure is an RLF after successful completion of the handover.
- Step 306: The UE stores information associated to the failure in a first report (e.g., an RLF report).
- Step 308: The UE attempts to perform cell selection in the same radio access technology as the second network node and selects a cell in the same radio access technology as the second network node.
   ∘ In one embodiment, the UE may select a suitable cell
   ∘ In another embodiment, the UE may select an acceptable cell if there is no suitable cell.
   ∘ In another embodiment, the UE may select an acceptable cell even if a suitable cell exists.
   ∘ In yet another embodiment, the UE may select a cell from another PLMN, different from the PLMN in which the UE performed the handover toward the second cell.
- Step 310: The UE includes an indication in the first report, where this indication indicates whether the selected cell was a suitable cell or an acceptable cell.
   ∘ In an embodiment, the UE does not include the selected cell ID if the selected cell is not a suitable cell.
   ∘ In another embodiment, the UE logs and reports the time from failure to the time of cell selection in the first report (e.g., in the RLF report).
   ∘ In another embodiment, the UE logs and reports information about whether the UE had detected one or more suitable cells and information about whether the UE has detected one or more acceptable cells.
- Step 312 (Optional): The UE includes an indication in the first report indicating the PLMN identity of the selected cell.
   ∘ In an embodiment, the UE can include an indication indicating whether the selected PLMN is the same as the PLMN of the target cell of the performed handover or not.
- Step 314 (Optional): The UE includes an indication in the first report indicating whether emergency services was enabled for the selected cell.
- Step 316: The UE transmits the first report to a network node.

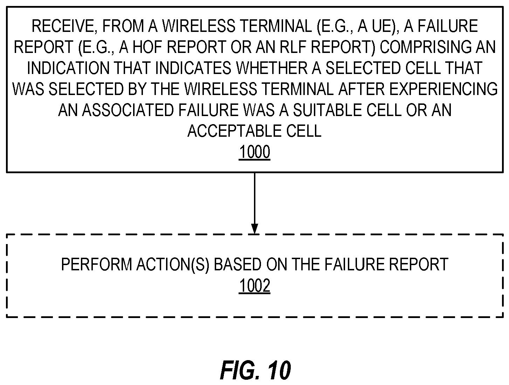

Figure 10 is a flow chart that illustrates the operation of a network node in accordance with one embodiment of the present disclosure. As illustrated, the network node receives, from a wireless terminal (e.g., a UE), a failure report (e.g., a HOF report or an RLF report) comprising an indication that indicates whether a selected cell that was selected by the wireless terminal after experiencing an associated failure was a suitable cell or an acceptable cell (step 1000). The network node may then perform one or more actions based on the failure report (e.g., forward the failure report to network node serving the original source cell for analysis) (step 1002).

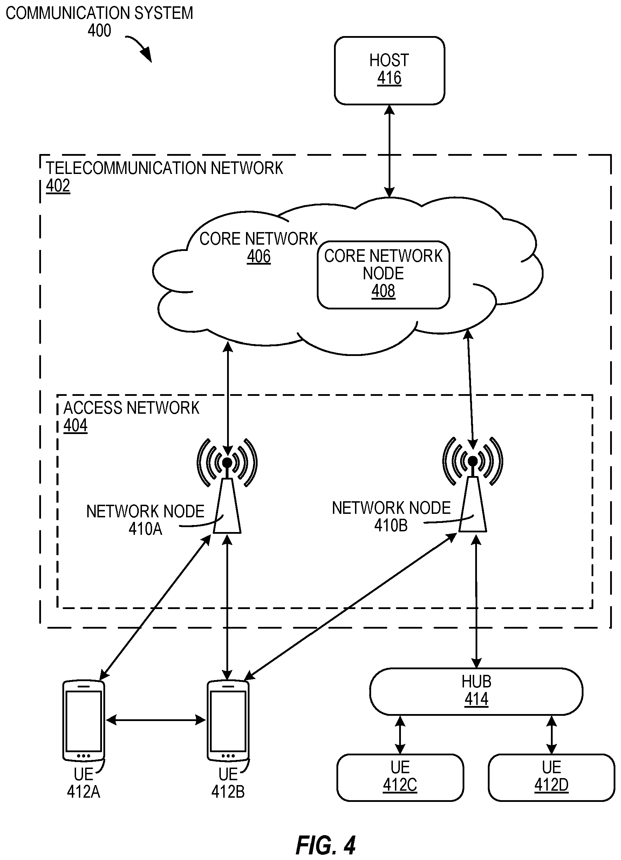

Figure 4 shows an example of a communication system 400 in accordance with some embodiments.

In the example, the communication system 400 includes a telecommunication network 402 that includes an access network 404, such as a Radio Access Network (RAN), and a core network 406, which includes one or more core network nodes 408. The access network 404 includes one or more access network nodes, such as network nodes 410A and 410B (one or more of which may be generally referred to as network nodes 410), or any other similar Third Generation Partnership Project (3GPP) access node or non-3GPP Access Point (AP). The network nodes 410 facilitate direct or indirect connection of User Equipment (UE), such as by connecting UEs 412A, 412B, 412C, and 412D (one or more of which may be generally referred to as UEs 412) to the core network 406 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 400 may include any number of wired or wireless networks, network nodes, UEs, and/or any other components or systems that may facilitate or participate in the communication of data and/or signals whether via wired or wireless connections. The communication system 400 may include and/or interface with any type of communication, telecommunication, data, cellular, radio network, and/or other similar type of system.

The UEs 412 may be any of a wide variety of communication devices, including wireless devices arranged, configured, and/or operable to communicate wirelessly with the network nodes 410 and other communication devices. Similarly, the network nodes 410 are arranged, capable, configured, and/or operable to communicate directly or indirectly with the UEs 412 and/or with other network nodes or equipment in the telecommunication network 402 to enable and/or provide network access, such as wireless network access, and/or to perform other functions, such as administration in the telecommunication network 402.

In the depicted example, the core network 406 connects the network nodes 410 to one or more hosts, such as host 416. These connections may be direct or indirect via one or more intermediary networks or devices. In other examples, network nodes may be directly coupled to hosts. The core network 406 includes one more core network nodes (e.g., core network node 408) that are structured with hardware and software components. Features of these components may be substantially similar to those described with respect to the UEs, network nodes, and/or hosts, such that the descriptions thereof are generally applicable to the corresponding components of the core network node 408. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 416 may be under the ownership or control of a service provider other than an operator or provider of the access network 404 and/or the telecommunication network 402, and may be operated by the service provider or on behalf of the service provider. The host 416 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 400 of Figure 4 enables connectivity between the UEs, network nodes, and hosts. In that sense, the communication system 400 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 402 is a cellular network that implements 3GPP standardized features. Accordingly, the telecommunication network 402 may support network slicing to provide different logical networks to different devices that are connected to the telecommunication network 402. For example, the telecommunication network 402 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 412 are configured to transmit and/or receive information without direct human interaction. For instance, a UE may be designed to transmit information to the access network 404 on a predetermined schedule, when triggered by an internal or external event, or in response to requests from the access network 404. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 414 communicates with the access network 404 to facilitate indirect communication between one or more UEs (e.g., UE 412C and/or 412D) and network nodes (e.g., network node 410B). In some examples, the hub 414 may be a controller, router, content source and analytics, or any of the other communication devices described herein regarding UEs. For example, the hub 414 may be a broadband router enabling access to the core network 406 for the UEs. As another example, the hub 414 may be a controller that sends commands or instructions to one or more actuators in the UEs. Commands or instructions may be received from the UEs, network nodes 410, or by executable code, script, process, or other instructions in the hub 414. As another example, the hub 414 may be a data collector that acts as temporary storage for UE data and, in some embodiments, may perform analysis or other processing of the data. As another example, the hub 414 may be a content source. For example, for a UE that is a Virtual Reality (VR) headset, display, loudspeaker or other media delivery device, the hub 414 may retrieve VR assets, video, audio, or other media or data related to sensory information via a network node, which the hub 414 then provides to the UE either directly, after performing local processing, and/or after adding additional local content. In still another example, the hub 414 acts as a proxy server or orchestrator for the UEs, in particular in if one or more of the UEs are low energy IoT devices.

The hub 414 may have a constant/persistent or intermittent connection to the network node 410B. The hub 414 may also allow for a different communication scheme and/or schedule between the hub 414 and UEs (e.g., UE 412C and/or 412D), and between the hub 414 and the core network 406. In other examples, the hub 414 is connected to the core network 406 and/or one or more UEs via a wired connection. Moreover, the hub 414 may be configured to connect to a Machine-to-Machine (M2M) service provider over the access network 404 and/or to another UE over a direct connection. In some scenarios, UEs may establish a wireless connection with the network nodes 410 while still connected via the hub 414 via a wired or wireless connection. In some embodiments, the hub 414 may be a dedicated hub - that is, a hub whose primary function is to route communications to/from the UEs from/to the network node 410B. In other embodiments, the hub 414 may be a non-dedicated hub - that is, a device which is capable of operating to route communications between the UEs and the network node 410B, but which is additionally capable of operating as a communication start and/or end point for certain data channels.

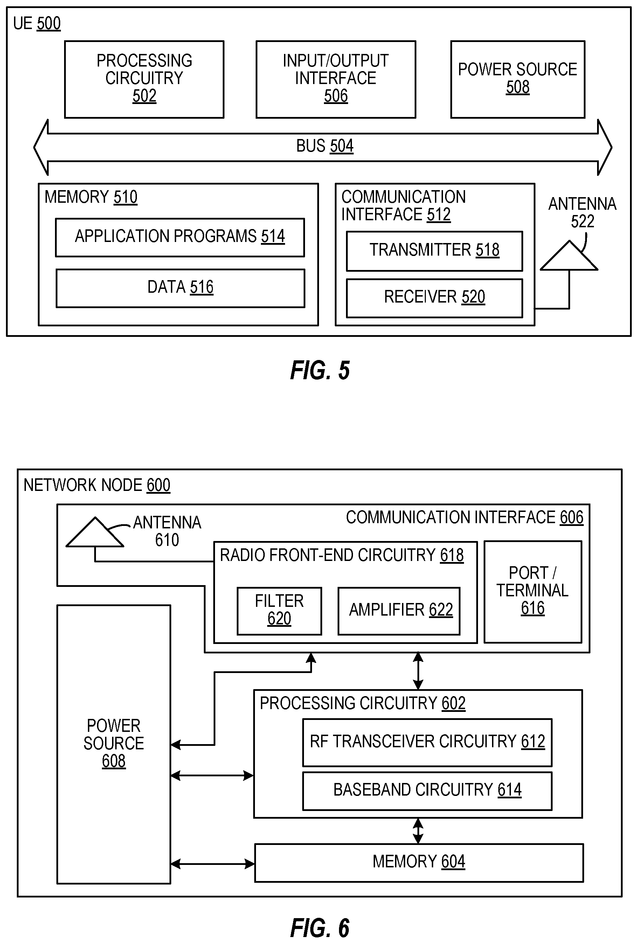

Figure 5 shows a UE 500 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 500 includes processing circuitry 502 that is operatively coupled via a bus 504 to an input/output interface 506, a power source 508, memory 510, a communication interface 512, and/or any other component, or any combination thereof. Certain UEs may utilize all or a subset of the components shown in Figure 5. The level of integration between the components may vary from one UE to another UE. Further, certain UEs may contain multiple instances of a component, such as multiple processors, memories, transceivers, transmitters, receivers, etc.

The processing circuitry 502 is configured to process instructions and data and may be configured to implement any sequential state machine operative to execute instructions stored as machine-readable computer programs in the memory 510. The processing circuitry 502 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 502 may include multiple Central Processing Units (CPUs).

In the example, the input/output interface 506 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 500. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 508 is structured as a battery or battery pack. Other types of power sources, such as an external power source (e.g., an electricity outlet), photovoltaic device, or power cell, may be used. The power source 508 may further include power circuitry for delivering power from the power source 508 itself, and/or an external power source, to the various parts of the UE 500 via input circuitry or an interface such as an electrical power cable. Delivering power may be, for example, for charging the power source 508. Power circuitry may perform any formatting, converting, or other modification to the power from the power source 508 to make the power suitable for the respective components of the UE 500 to which power is supplied.

The memory 510 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 510 includes one or more application programs 514, such as an operating system, web browser application, a widget, gadget engine, or other application, and corresponding data 516. The memory 510 may store, for use by the UE 500, any of a variety of various operating systems or combinations of operating systems.

The memory 510 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 510 may allow the UE 500 to access instructions, application programs, and the like stored on transitory or non-transitory memory media, to off-load data, or to upload data. An article of manufacture, such as one utilizing a communication system, may be tangibly embodied as or in the memory 510, which may be or comprise a device-readable storage medium.

The processing circuitry 502 may be configured to communicate with an access network or other network using the communication interface 512. The communication interface 512 may comprise one or more communication subsystems and may include or be communicatively coupled to an antenna 522. The communication interface 512 may include one or more transceivers used to communicate, such as by communicating with one or more remote transceivers of another device capable of wireless communication (e.g., another UE or a network node in an access network). Each transceiver may include a transmitter 518 and/or a receiver 520 appropriate to provide network communications (e.g., optical, electrical, frequency allocations, and so forth). Moreover, the transmitter 518 and receiver 520 may be coupled to one or more antennas (e.g., the antenna 522) and may share circuit components, software, or firmware, or alternatively be implemented separately.

In the illustrated embodiment, communication functions of the communication interface 512 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 512, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 500 shown in Figure 5.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 6 shows a network node 600 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), and NR Node Bs (gNBs)).

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 600 includes processing circuitry 602, memory 604, a communication interface 606, and a power source 608. The network node 600 may be composed of multiple physically separate components (e.g., a Node B component and an RNC component, or a BTS component and a BSC component, etc.), which may each have their own respective components. In certain scenarios in which the network node 600 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 600 may be configured to support multiple RATs. In such embodiments, some components may be duplicated (e.g., separate memory 604 for different RATs) and some components may be reused (e.g., an antenna 610 may be shared by different RATs). The network node 600 may also include multiple sets of the various illustrated components for different wireless technologies integrated into network node 600, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 600.

The processing circuitry 602 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 600 components, such as the memory 604, to provide network node 600 functionality.

In some embodiments, the processing circuitry 602 includes a System on a Chip (SOC). In some embodiments, the processing circuitry 602 includes one or more of Radio Frequency (RF) transceiver circuitry 612 and baseband processing circuitry 614. In some embodiments, the RF transceiver circuitry 612 and the baseband processing circuitry 614 may be on separate chips (or sets of chips), boards, or units, such as radio units and digital units. In alternative embodiments, part or all of the RF transceiver circuitry 612 and the baseband processing circuitry 614 may be on the same chip or set of chips, boards, or units.

The memory 604 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 602. The memory 604 may store any suitable instructions, data, or information, including a computer program, software, an application including one or more of logic, rules, code, tables, and/or other instructions capable of being executed by the processing circuitry 602 and utilized by the network node 600. The memory 604 may be used to store any calculations made by the processing circuitry 602 and/or any data received via the communication interface 606. In some embodiments, the processing circuitry 602 and the memory 604 are integrated.

The communication interface 606 is used in wired or wireless communication of signaling and/or data between a network node, access network, and/or UE. As illustrated, the communication interface 606 comprises port(s)/terminal(s) 616 to send and receive data, for example to and from a network over a wired connection. The communication interface 606 also includes radio front-end circuitry 618 that may be coupled to, or in certain embodiments a part of, the antenna 610. The radio front-end circuitry 618 comprises filters 620 and amplifiers 622. The radio front-end circuitry 618 may be connected to the antenna 610 and the processing circuitry 602. The radio front-end circuitry 618 may be configured to condition signals communicated between the antenna 610 and the processing circuitry 602. The radio front-end circuitry 618 may receive digital data that is to be sent out to other network nodes or UEs via a wireless connection. The radio front-end circuitry 618 may convert the digital data into a radio signal having the appropriate channel and bandwidth parameters using a combination of the filters 620 and/or the amplifiers 622. The radio signal may then be transmitted via the antenna 610. Similarly, when receiving data, the antenna 610 may collect radio signals which are then converted into digital data by the radio front-end circuitry 618. The digital data may be passed to the processing circuitry 602. In other embodiments, the communication interface 606 may comprise different components and/or different combinations of components.

In certain alternative embodiments, the network node 600 does not include separate radio front-end circuitry 618; instead, the processing circuitry 602 includes radio front-end circuitry and is connected to the antenna 610. Similarly, in some embodiments, all or some of the RF transceiver circuitry 612 is part of the communication interface 606. In still other embodiments, the communication interface 606 includes the one or more ports or terminals 616, the radio front-end circuitry 618, and the RF transceiver circuitry 612 as part of a radio unit (not shown), and the communication interface 606 communicates with the baseband processing circuitry 614, which is part of a digital unit (not shown).

The antenna 610 may include one or more antennas, or antenna arrays, configured to send and/or receive wireless signals. The antenna 610 may be coupled to the radio front-end circuitry 618 and may be any type of antenna capable of transmitting and receiving data and/or signals wirelessly. In certain embodiments, the antenna 610 is separate from the network node 600 and connectable to the network node 600 through an interface or port.

The antenna 610, the communication interface 606, and/or the processing circuitry 602 may be configured to perform any receiving operations and/or certain obtaining operations described herein as being performed by the network node 600. Any information, data, and/or signals may be received from a UE, another network node, and/or any other network equipment. Similarly, the antenna 610, the communication interface 606, and/or the processing circuitry 602 may be configured to perform any transmitting operations described herein as being performed by the network node 600. Any information, data, and/or signals may be transmitted to a UE, another network node, and/or any other network equipment.

The power source 608 provides power to the various components of the network node 600 in a form suitable for the respective components (e.g., at a voltage and current level needed for each respective component). The power source 608 may further comprise, or be coupled to, power management circuitry to supply the components of the network node 600 with power for performing the functionality described herein. For example, the network node 600 may be connectable to an external power source (e.g., the power grid or an electricity outlet) via input circuitry or an interface such as an electrical cable, whereby the external power source supplies power to power circuitry of the power source 608. As a further example, the power source 608 may comprise a source of power in the form of a battery or battery pack which is connected to, or integrated in, power circuitry. The battery may provide backup power should the external power source fail.

Embodiments of the network node 600 may include additional components beyond those shown in Figure 6 for providing certain aspects of the network node's functionality, including any of the functionality described herein and/or any functionality necessary to support the subject matter described herein. For example, the network node 600 may include user interface equipment to allow input of information into the network node 600 and to allow output of information from the network node 600. This may allow a user to perform diagnostic, maintenance, repair, and other administrative functions for the network node 600.

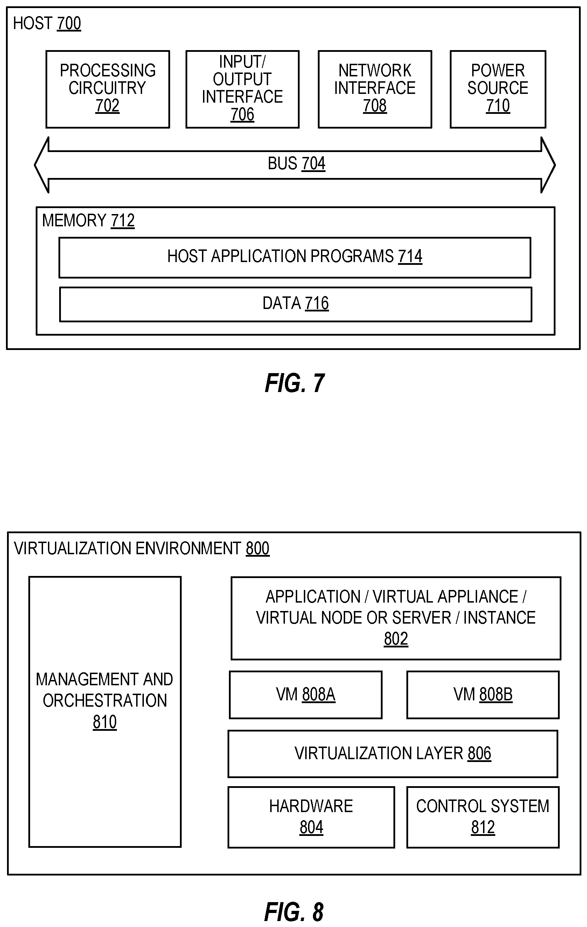

Figure 7 is a block diagram of a host 700, which may be an embodiment of the host 416 of Figure 4, in accordance with various aspects described herein. As used herein, the host 700 may be or comprise various combinations of hardware and/or software including a standalone server, a blade server, a cloud-implemented server, a distributed server, a virtual machine, container, or processing resources in a server farm. The host 700 may provide one or more services to one or more UEs.

The host 700 includes processing circuitry 702 that is operatively coupled via a bus 704 to an input/output interface 706, a network interface 708, a power source 710, and memory 712. Other components may be included in other embodiments. Features of these components may be substantially similar to those described with respect to the devices of previous figures, such as Figures 5 and 6, such that the descriptions thereof are generally applicable to the corresponding components of the host 700.

The memory 712 may include one or more computer programs including one or more host application programs 714 and data 716, which may include user data, e.g. data generated by a UE for the host 700 or data generated by the host 700 for a UE. Embodiments of the host 700 may utilize only a subset or all of the components shown. The host application programs 714 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 714 may also provide for user authentication and licensing checks and may periodically report health, routes, and content availability to a central node, such as a device in or on the edge of a core network. Accordingly, the host 700 may select and/or indicate a different host for Over-The-Top (OTT) services for a UE. The host application programs 714 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 8 is a block diagram illustrating a virtualization environment 800 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 800 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 802 (which may alternatively be called software instances, virtual appliances, network functions, virtual nodes, virtual network functions, etc.) are run in the virtualization environment 700 to implement some of the features, functions, and/or benefits of some of the embodiments disclosed herein.

Hardware 804 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 806 (also referred to as hypervisors or VM Monitors (VMMs)), provide VMs 808A and 808B (one or more of which may be generally referred to as VMs 808), and/or perform any of the functions, features, and/or benefits described in relation with some embodiments described herein. The virtualization layer 806 may present a virtual operating platform that appears like networking hardware to the VMs 808.

The VMs 808 comprise virtual processing, virtual memory, virtual networking, or interface and virtual storage, and may be run by a corresponding virtualization layer 806. Different embodiments of the instance of a virtual appliance 802 may be implemented on one or more of the VMs 808, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 808 may be a software implementation of a physical machine that runs programs as if they were executing on a physical, non-virtualized machine. Each of the VMs 808, and that part of the hardware 804 that executes that VM, be it hardware dedicated to that VM and/or hardware shared by that VM with others of the VMs 808, forms separate virtual network elements. Still in the context of NFV, a virtual network function is responsible for handling specific network functions that run in one or more VMs 808 on top of the hardware 804 and corresponds to the application 802.

The hardware 804 may be implemented in a standalone network node with generic or specific components. The hardware 804 may implement some functions via virtualization. Alternatively, the hardware 804 may be part of a larger cluster of hardware (e.g., such as in a data center or CPE) where many hardware nodes work together and are managed via management and orchestration 810, which, among others, oversees lifecycle management of the applications 802. In some embodiments, the hardware 804 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 812 which may alternatively be used for communication between hardware nodes and radio units.

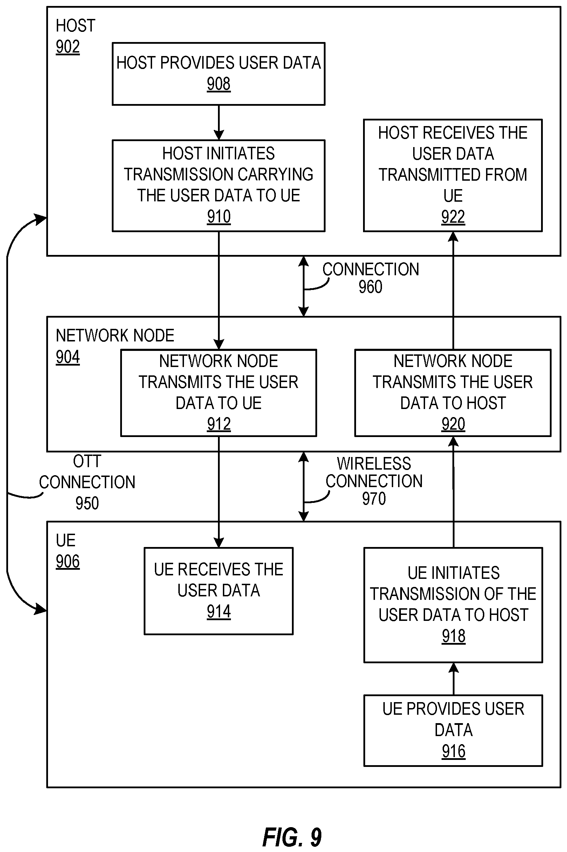

Figure 9 shows a communication diagram of a host 902 communicating via a network node 904 with a UE 906 over a partially wireless connection in accordance with some embodiments. Example implementations, in accordance with various embodiments, of the UE (such as the UE 412A of Figure 4 and/or the UE 500 of Figure 5), the network node (such as the network node 410A of Figure 4 and/or the network node 600 of Figure 6), and the host (such as the host 416 of Figure 4 and/or the host 700 of Figure 7) discussed in the preceding paragraphs will now be described with reference to Figure 9.

Like the host 700, embodiments of the host 902 include hardware, such as a communication interface, processing circuitry, and memory. The host 902 also includes software, which is stored in or is accessible by the host 902 and executable by the processing circuitry. The software includes a host application that may be operable to provide a service to a remote user, such as the UE 906 connecting via an OTT connection 950 extending between the UE 906 and the host 902. In providing the service to the remote user, a host application may provide user data which is transmitted using the OTT connection 950.

The network node 904 includes hardware enabling it to communicate with the host 902 and the UE 906 via a connection 960. The connection 960 may be direct or pass through a core network (like the core network 406 of Figure 4) and/or one or more other intermediate networks, such as one or more public, private, or hosted networks. For example, an intermediate network may be a backbone network or the Internet.

The UE 906 includes hardware and software, which is stored in or accessible by the UE 906 and executable by the UE's processing circuitry. The software includes a client application, such as a web browser or operator-specific "app" that may be operable to provide a service to a human or non-human user via the UE 906 with the support of the host 902. In the host 902, an executing host application may communicate with the executing client application via the OTT connection 950 terminating at the UE 906 and the host 902. In providing the service to the user, the UE's client application may receive request data from the host's host application and provide user data in response to the request data. The OTT connection 950 may transfer both the request data and the user data. The UE's client application may interact with the user to generate the user data that it provides to the host application through the OTT connection 950.

The OTT connection 950 may extend via the connection 960 between the host 902 and the network node 904 and via a wireless connection 970 between the network node 904 and the UE 906 to provide the connection between the host 902 and the UE 906. The connection 960 and the wireless connection 970, over which the OTT connection 950 may be provided, have been drawn abstractly to illustrate the communication between the host 902 and the UE 906 via the network node 904, without explicit reference to any intermediary devices and the precise routing of messages via these devices.

As an example of transmitting data via the OTT connection 950, in step 908, the host 902 provides user data, which may be performed by executing a host application. In some embodiments, the user data is associated with a particular human user interacting with the UE 906. In other embodiments, the user data is associated with a UE 906 that shares data with the host 902 without explicit human interaction. In step 910, the host 902 initiates a transmission carrying the user data towards the UE 906. The host 902 may initiate the transmission responsive to a request transmitted by the UE 906. The request may be caused by human interaction with the UE 906 or by operation of the client application executing on the UE 906. The transmission may pass via the network node 904 in accordance with the teachings of the embodiments described throughout this disclosure. Accordingly, in step 912, the network node 904 transmits to the UE 906 the user data that was carried in the transmission that the host 902 initiated, in accordance with the teachings of the embodiments described throughout this disclosure. In step 914, the UE 906 receives the user data carried in the transmission, which may be performed by a client application executed on the UE 906 associated with the host application executed by the host 902.

In some examples, the UE 906 executes a client application which provides user data to the host 902. The user data may be provided in reaction or response to the data received from the host 902. Accordingly, in step 916, the UE 906 may provide user data, which may be performed by executing the client application. In providing the user data, the client application may further consider user input received from the user via an input/output interface of the UE 906. Regardless of the specific manner in which the user data was provided, the UE 906 initiates, in step 918, transmission of the user data towards the host 902 via the network node 904. In step 920, in accordance with the teachings of the embodiments described throughout this disclosure, the network node 904 receives user data from the UE 906 and initiates transmission of the received user data towards the host 902. In step 922, the host 902 receives the user data carried in the transmission initiated by the UE 906.

One or more of the various embodiments improve the performance of OTT services provided to the UE 906 using the OTT connection 950, in which the wireless connection 970 forms the last segment.

In an example scenario, factory status information may be collected and analyzed by the host 902. As another example, the host 902 may process audio and video data which may have been retrieved from a UE for use in creating maps. As another example, the host 902 may collect and analyze real-time data to assist in controlling vehicle congestion (e.g., controlling traffic lights). As another example, the host 902 may store surveillance video uploaded by a UE. As another example, the host 902 may store or control access to media content such as video, audio, VR, or AR which it can broadcast, multicast, or unicast to UEs. As other examples, the host 902 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 950 between the host 902 and the UE 906 in response to variations in the measurement results. The measurement procedure and/or the network functionality for reconfiguring the OTT connection 950 may be implemented in software and hardware of the host 902 and/or the UE 906. In some embodiments, sensors (not shown) may be deployed in or in association with other devices through which the OTT connection 950 passes; the sensors may participate in the measurement procedure by supplying values of the monitored quantities exemplified above, or by supplying values of other physical quantities from which software may compute or estimate the monitored quantities. The reconfiguring of the OTT connection 950 may include message format, retransmission settings, preferred routing, etc.; the reconfiguring need not directly alter the operation of the network node 904. Such procedures and functionalities may be known and practiced in the art. In certain embodiments, measurements may involve proprietary UE signaling that facilitates measurements of throughput, propagation times, latency, and the like by the host 902. The measurements may be implemented in that software causes messages to be transmitted, in particular empty or 'dummy' messages, using the OTT connection 950 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole and/or by end users and a wireless network generally.

Those skilled in the art will recognize improvements and modifications to the embodiments of the present disclosure. All such improvements and modifications are considered within the scope of the concepts disclosed herein.

## Claims

1. A method performed by a wireless terminal, the method comprising:
receiving (300) a configuration from a first cell to perform handover to a second cell, the configuration comprising an indication indicating voice fallback purpose;
attempting (302) to connect to the second cell using a mobility procedure, wherein the first cell is a cell of a first radio access technology, RAT, and the second cell is a cell of a second radio access technology;
determining (304) that a failure has occurred with respect to connecting to the second cell;
storing (306) information associated to the failure in a first report;
attempting (308) to perform cell selection in a same radio access technology as the second cell and selecting a cell in the same radio access technology as the second cell; and
including (310), in the first report, an indication of whether the selected cell was a suitable cell or an acceptable cell, whereby the wireless terminal does not include a selected cell identity, ID, in the first report if the selected cell is not a suitable cell, wherein a suitable cell is a cell on which a wireless terminal may camp, and an acceptable cell is a cell on which a wireless terminal may camp to obtain limited service,
transmitting (316) the first report to a network node.

2. The method of any of claims 1 to 2, wherein the first cell is operated by a first network node, and the second cell is operated by a second network node.

3. The method of any of claims 1 to 3, wherein the selected cell is operated by a same or different network node than that which operates the second cell.

4. The method of any of claims 1 to 4, wherein the failure is a handover failure.

5. The method of any of claims 1 to 4, wherein the failure is a radio link failure, RLF, after successful completion of the handover.

6. The method of any of claims 1 to 5, wherein the selected cell is a suitable cell.

7. The method of any of claims 1 to 5, wherein the selected cell is an acceptable cell.

8. The method of any of claims 1 to 5, wherein selecting (308) the cell in the same radio access technology as the second cell comprises selecting (308) a cell from a Public Land Mobile Network, PLMN, that is different from a PLMN in which the wireless terminal performed the handover toward the second cell.

9. The method of claim 8, further comprising storing (312), in the first report, an indication that indicates a PLMN identity of the selected cell.

10. The method of claim 8, further comprising storing (312), in the first report, an indication that indicates whether the PLMN of the selected cell is the same as a PLMN of the second cell.

11. The method of any of claims 1 to 10, wherein the wireless terminal logs and reports information about whether the wireless terminal had detected one or more suitable cells and/or information about whether the wireless terminal has detected one or more acceptable cells.

12. A wireless terminal adapted to:
receive (300) a configuration from a first cell to perform handover to a second cell, the configuration comprising an indication indicating voice fallback purpose;
attempt (302) to connect to the second cell using a mobility procedure;
determine (304) that a failure has occurred with respect to connecting to the second cell;
store (306) information associated to the failure in a first report;
attempt (308) to perform cell selection in a same radio access technology as the second cell and select a cell in the same radio access technology as the second cell; and
include (310), in the first report, an indication of whether the selected cell was a suitable cell or an acceptable cell, whereby the wireless terminal does not include a selected cell identity, ID, in the first report if the selected cell is not a suitable cell, wherein a suitable cell is a cell on which a wireless terminal may camp, and an acceptable cell is a cell on which a wireless terminal may camp to obtain limited service.

13. The wireless terminal of claim 12, further adapted to perform the method of any of claims 2 to 11.

14. A method performed by a network node for a Radio Access Network, RAN, of a cellular communications system, the method comprising:
receiving (1000), from a wireless terminal, a failure report comprising an indication of whether a selected cell that was selected by the wireless terminal after experiencing an associated failure was a suitable cell or an acceptable cell, whereby a cell identity, ID, of the selected cell is not included in the first report if the selected cell is not a suitable cell, wherein a suitable cell is a cell on which a wireless terminal may camp, and an acceptable cell is a cell on which a wireless terminal may camp to obtain limited service; and
performing (1002) one or more actions based on the failure report.

15. A network node for a Radio Access Network, RAN, of a cellular communications system, the network node adapted to:
receive (1000), from a wireless terminal, a failure report comprising an indication of whether a selected cell that was selected by the wireless terminal after experiencing an associated failure was a suitable cell or an acceptable cell, whereby a cell identity, ID, of the selected cell is not included in the first report if the selected cell is not a suitable cell, wherein a suitable cell is a cell on which a wireless terminal may camp, and an acceptable cell is a cell on which a wireless terminal may camp to obtain limited service; and
perform (1002) one or more actions based on the failure report.

## Patentansprüche

1. Verfahren, das durch ein drahtloses Endgerät durchgeführt wird, wobei das Verfahren umfasst:
Empfangen (300) einer Konfiguration von einer ersten Zelle, um ein Handover an eine zweite Zelle durchzuführen, wobei die Konfiguration eine Angabe umfasst, die einen Voice-Fallback-Zweck angibt;
Versuchen (302), sich unter Verwendung einer Mobilitätsprozedur mit der zweiten Zelle zu verbinden, wobei die erste Zelle eine Zelle einer ersten Funkzugangstechnologie, RAT, ist und die zweite Zelle eine Zelle einer zweiten Funkzugangstechnologie ist;
Ermitteln (304), dass es in Bezug auf die Verbindung mit der zweiten Zelle zu einem Fehler gekommen ist;
Speichern (306) von Informationen zu dem Fehler in einem ersten Bericht;
Versuchen (308), eine Zellenauswahl in einer gleichen Funkzugangstechnologie wie die zweite Zelle durchzuführen, und Auswählen einer Zelle in der gleichen Funkzugangstechnologie wie die zweite Zelle; und
Aufnehmen (310) einer Angabe in dem ersten Bericht dazu, ob die ausgewählte Zelle eine geeignete Zelle oder eine akzeptable Zelle ist, wodurch das drahtlose Endgerät eine ausgewählte Zellkennung, ID, nicht in dem ersten Bericht aufnimmt, wenn die ausgewählte Zelle keine geeignete Zelle ist, wobei eine geeignete Zelle eine Zelle ist, auf der sich ein drahtloses Endgerät einbuchen kann, und eine akzeptable Zelle eine Zelle ist, auf der sich ein drahtloses Endgerät einbuchen kann, um einen begrenzten Dienst zu erhalten, Übertragen (316) des ersten Berichts an einen Netzwerkknoten.

2. Verfahren nach einem der Ansprüche 1 bis 2, wobei die erste Zelle von einem ersten Netzwerkknoten betrieben wird und die zweite Zelle von einem zweiten Netzwerkknoten betrieben wird.

3. Verfahren nach einem der Ansprüche 1 bis 3, wobei die ausgewählte Zelle von einem gleichen oder einem anderen Netzwerkknoten als jenem betrieben wird, der die zweite Zelle betreibt.

4. Verfahren nach einem der Ansprüche 1 bis 4, wobei der Fehler ein Handover-Fehler ist.

5. Verfahren nach einem der Ansprüche 1 bis 4, wobei der Fehler ein Funkverbindungsfehler, RLF, nach erfolgreichem Abschluss des Handovers ist.

6. Verfahren nach einem der Ansprüche 1 bis 5, wobei die ausgewählte Zelle eine geeignete Zelle ist.

7. Verfahren nach einem der Ansprüche 1 bis 5, wobei die ausgewählte Zelle eine akzeptable Zelle ist.

8. Verfahren nach einem der Ansprüche 1 bis 5, wobei das Auswählen (308) der Zelle in der gleichen Funkzugangstechnologie wie die zweite Zelle das Auswählen (308) einer Zelle aus einem öffentlich terrestrischen Mobilfunknetz, PLMN, umfasst, das sich von einem PLMN unterscheidet, in dem das drahtlose Endgerät den Handover an die zweite Zelle durchgeführt hat.

9. Verfahren nach Anspruch 8, das ferner das Speichern (312) einer Angabe in dem ersten Bericht umfasst, die eine PLMN-Kennung der ausgewählten Zelle angibt.

10. Verfahren nach Anspruch 8, das ferner das Speichern (312) einer Angabe in dem ersten Bericht umfasst, die angibt, ob das PLMN der ausgewählten Zelle das gleiche wie ein PLMN der zweiten Zelle ist.

11. Verfahren nach einem der Ansprüche 1 bis 10, wobei das drahtlose Endgerät Informationen darüber, ob das drahtlose Endgerät eine oder mehrere geeignete Zellen detektiert hat, und/oder Informationen darüber, ob das drahtlose Endgerät eine oder mehrere akzeptable Zellen detektiert hat, protokolliert und berichtet.

12. Drahtloses Endgerät, das dazu ausgelegt ist:
Empfangen (300) einer Konfiguration von einer ersten Zelle, um ein Handover an eine zweite Zelle durchzuführen, wobei die Konfiguration eine Angabe umfasst, die einen Voice-Fallback-Zweck angibt;
Versuchen (302), sich unter Verwendung einer Mobilitätsprozedur mit der zweiten Zelle zu verbinden;
Ermitteln (304), dass es in Bezug auf die Verbindung mit der zweiten Zelle zu einem Fehler gekommen ist;
Speichern (306) von Informationen zu dem Fehler in einem ersten Bericht;
Versuchen (308), eine Zellenauswahl in einer gleichen Funkzugangstechnologie wie die zweite Zelle durchzuführen, und Auswählen einer Zelle in der gleichen Funkzugangstechnologie wie die zweite Zelle; und
Aufnehmen (310) einer Angabe in dem ersten Bericht dazu, ob die ausgewählte Zelle eine geeignete Zelle oder eine akzeptable Zelle ist, wodurch das drahtlose Endgerät eine ausgewählte Zellkennung, ID, nicht in dem ersten Bericht aufnimmt, wenn die ausgewählte Zelle keine geeignete Zelle ist, wobei eine geeignete Zelle eine Zelle ist, auf der sich ein drahtloses Endgerät einbuchen kann, und eine akzeptable Zelle eine Zelle ist, auf der sich ein drahtloses Endgerät einbuchen kann, um einen begrenzten Dienst zu erhalten.

13. Drahtloses Endgerät nach Anspruch 12, das ferner dazu ausgelegt ist, das Verfahren nach einem der Ansprüche 2 bis 11 durchzuführen.

14. Verfahren, das durch einen Netzwerkknoten für ein Funkzugangsnetz, RAN, eines zellulären Kommunikationssystems durchgeführt wird, wobei das Verfahren umfasst:
Empfangen (1000) eines Fehlerberichts von einem drahtlosen Endgerät, der eine Angabe darüber umfasst, ob eine ausgewählte Zelle, die von dem drahtlosen Endgerät nach einem verknüpften Fehler ausgewählt wurde, eine geeignete Zelle oder eine akzeptable Zelle war, wodurch eine Zellkennung, ID, der ausgewählten Zelle nicht in den ersten Bericht aufgenommen wird, wenn die ausgewählte Zelle keine geeignete Zelle ist, wobei eine geeignete Zelle eine Zelle ist, auf der sich ein drahtloses Endgerät einbuchen kann, oder eine akzeptable Zelle ist, auf der sich ein drahtloses Gerät einbuchen kann, um einen begrenzten Dienst zu erhalten; und
Durchführen (1002) einer oder mehrerer Aktionen auf der Grundlage des Fehlerberichts.

15. Netzwerkknoten für ein Funkzugangsnetz, RAN, eines zellulären Kommunikationssystems, wobei der Netzwerkknoten dazu ausgelegt ist:
Empfangen (1000) eines Fehlerberichts von einem drahtlosen Endgerät, der eine Angabe darüber umfasst, ob eine ausgewählte Zelle, die von dem drahtlosen Endgerät nach einem verknüpften Fehler ausgewählt wurde, eine geeignete Zelle oder eine akzeptable Zelle war, wodurch eine Zellkennung, ID, der ausgewählten Zelle nicht in den ersten Bericht aufgenommen wird, wenn die ausgewählte Zelle keine geeignete Zelle ist, wobei eine geeignete Zelle eine Zelle ist, auf der sich ein drahtloses Endgerät einbuchen kann, oder eine akzeptable Zelle ist, auf der sich ein drahtloses Gerät einbuchen kann, um einen begrenzten Dienst zu erhalten; und
Durchführen (1002) einer oder mehrerer Aktionen auf der Grundlage des Fehlerberichts.

## Revendications

1. Procédé réalisé par un terminal sans fil, le procédé comprenant :
la réception (300) d'une configuration à partir d'une première cellule pour réaliser un transfert vers une seconde cellule, la configuration comprenant une indication indiquant un objectif de repli vocal ;
la tentative (302) de se connecter à la seconde cellule en utilisant une procédure de mobilité, dans lequel la première cellule est une cellule d'une première technologie d'accès radio, RAT, et la seconde cellule est une cellule d'une seconde technologie d'accès radio ;
la détermination (304) qu'une défaillance s'est produite en ce qui concerne la connexion à la seconde cellule ;
le stockage (306) d'informations associées à la défaillance dans un premier rapport ;
la tentative (308) de réaliser une sélection de cellule dans une même technologie d'accès radio que la seconde cellule et sélectionner une cellule dans la même technologie d'accès radio que la seconde cellule ; et
l'inclusion (310), dans le premier rapport, d'une indication indiquant si la cellule sélectionnée était une cellule appropriée ou une cellule acceptable, le terminal sans fil n'incluant pas d'identité, ID, de cellule sélectionnée dans le premier rapport si la cellule sélectionnée n'est pas une cellule appropriée, une cellule appropriée étant une cellule sur laquelle un terminal sans fil peut camper, et une cellule acceptable étant une cellule sur laquelle un terminal sans fil peut camper pour obtenir un service limité,
la transmission (316) du premier rapport à un nœud de réseau.

2. Procédé selon l'une quelconque des revendications 1 à 2, dans lequel la première cellule est exploitée par un premier nœud de réseau, et la seconde cellule est exploitée par un second nœud de réseau.

3. Procédé selon l'une quelconque des revendications 1 à 3, dans lequel la cellule sélectionnée est exploitée par un nœud de réseau identique ou différent de celui qui exploite la seconde cellule.

4. Procédé selon l'une quelconque des revendications 1 à 4, dans lequel la défaillance est une défaillance de transfert.

5. Procédé selon l'une quelconque des revendications 1 à 4, dans lequel la défaillance est une défaillance de liaison radio, RLF, après l'achèvement réussi du transfert.

6. Procédé selon l'une quelconque des revendications 1 à 5, dans lequel la cellule sélectionnée est une cellule appropriée.

7. Procédé selon l'une quelconque des revendications 1 à 5, dans lequel la cellule sélectionnée est une cellule acceptable.

8. Procédé selon l'une quelconque des revendications 1 à 5, dans lequel la sélection (308) de la cellule dans la même technologie d'accès radio que la seconde cellule comprend la sélection (308) d'une cellule d'un réseau mobile terrestre public, PLMN, qui est différent d'un PLMN dans lequel le terminal sans fil a réalisé le transfert vers la seconde cellule.

9. Procédé selon la revendication 8, comprenant en outre le stockage (312), dans le premier rapport, d'une indication qui indique une identité PLMN de la cellule sélectionnée.

10. Procédé selon la revendication 8, comprenant en outre le stockage (312), dans le premier rapport, d'une indication qui indique si le PLMN de la cellule sélectionnée est le même qu'un PLMN de la seconde cellule.

11. Procédé selon l'une quelconque des revendications 1 à 10, dans lequel le terminal sans fil enregistre et rapporte des informations indiquant si le terminal sans fil a détecté une ou plusieurs cellules appropriées et/ou des informations indiquant si le terminal sans fil a détecté une ou plusieurs cellules acceptables.

12. Terminal sans fil adapté pour :
recevoir (300) une configuration d'une première cellule pour réaliser un transfert vers une seconde cellule, la configuration comprenant une indication indiquant un objectif de repli vocal ;
tenter (302) de se connecter à la seconde cellule à l'aide d'une procédure de mobilité ;
déterminer (304) qu'une défaillance s'est produite en ce qui concerne la connexion à la seconde cellule ;
stocker (306) les informations associées à la défaillance dans un premier rapport ;
tenter (308) de réaliser une sélection de cellule dans une même technologie d'accès radio que la seconde cellule et sélectionner une cellule dans la même technologie d'accès radio que la seconde cellule ; et
inclure (310), dans le premier rapport, une indication indiquant si la cellule sélectionnée était une cellule appropriée ou une cellule acceptable, le terminal sans fil n'incluant pas d'identité, ID, de cellule sélectionnée dans le premier rapport si la cellule sélectionnée n'est pas une cellule appropriée, une cellule appropriée étant une cellule sur laquelle un terminal sans fil peut camper, et une cellule acceptable étant une cellule sur laquelle un terminal sans fil peut camper pour obtenir un service limité.

13. Terminal sans fil selon la revendication 12, en outre adapté pour réaliser le procédé selon l'une quelconque des revendications 2 à 11.

14. Procédé réalisé par un nœud de réseau pour un réseau d'accès radio, RAN, d'un système de communications cellulaires, le procédé comprenant :
la réception (1000), à partir d'un terminal sans fil, d'un rapport de défaillance comprenant une indication indiquant si une cellule sélectionnée par le terminal sans fil après avoir subi une défaillance associée était une cellule appropriée ou acceptable, une identité, ID, de cellule de la cellule sélectionnée n'étant pas incluse dans le premier rapport si la cellule sélectionnée n'est pas une cellule appropriée, une cellule appropriée étant une cellule sur laquelle un terminal sans fil peut camper, et une cellule acceptable étant une cellule sur laquelle un terminal sans fil peut camper pour obtenir un service limité ; et
la réalisation (1002) d'une ou plusieurs actions sur la base du rapport de défaillance.

15. Nœud de réseau pour un réseau d'accès radio, RAN, d'un système de communications cellulaires, le nœud de réseau étant adapté à :
recevoir (1000), à partir d'un terminal sans fil, un rapport de défaillance comprenant une indication indiquant si une cellule sélectionnée par le terminal sans fil après avoir subi une défaillance associée était une cellule appropriée ou une cellule acceptable, une identité, ID, de cellule de la cellule sélectionnée n'étant pas incluse dans le premier rapport si la cellule sélectionnée n'est pas une cellule appropriée, une cellule appropriée étant une cellule sur laquelle un terminal sans fil peut camper, et une cellule acceptable étant une cellule sur laquelle un terminal sans fil peut camper pour obtenir un service limité ; et
réaliser (1002) une ou plusieurs actions en fonction du rapport d'échec.
